# EUROPEAN PATENT APPLICATION

(11) **EP 3 916 539 A1**
(43) Date of publication of application: **01.12.2021**
(21) Application number: 20176501.3
(22) Date of filing: 26.05.2020
(51) Int. Cl.: G06F 8/30, G05B 19/418, G06F 8/33, G06F 8/35

(54) **SYSTEM AND METHOD FOR ENGINEERING A TECHNICAL SYSTEM**

(71) Applicant: Siemens Aktiengesellschaft, 80333 München (DE)
(72) Inventor: Geipel, Markus Michael, 80799 München (DE); Montrone, Francesco, 85521 Riemerling (DE)

(57) **Abstract**

System and method for engineering at least one technical system (610) including one or more cyber-physical devices (612-618) is disclosed. The method comprises generating an engineering code for the technical system (610) based on at least one of configuration and function associated with the devices (612-618), wherein the engineering code enables coordination between the devices (612-618) whereby at least one operation in the technical system (610) is performable; determining executability of the engineering code based on a compatibility indicator (410) associated with at least one of the devices (612, 212), the system and the operation; and engineering at least one device (612) of the one or more devices based on the determined executability of the engineering code.

## Description

The present invention relates to engineering systems and devices. Particularly, the present invention relates to engineering cyber-physical systems/devices in an automation environment.

Cyber-physical system and devices are capable of performing one or more mechanical or physical actions. The devices can be configured recognize the automation environment they are in, process information and are able to interact with the automation environment. Such systems are commonly used to enable remote and distributed control of the automation environment.

Use of the cyber-physical system and devices have enabled advancements in the automation industry. However, the advancements may also come at the cost of certain disadvantages such as complicated commissioning efforts.

For example, commissioning the cyber-physical devices and systems is difficult in view of the complexities to engineer the systems and devices. The challenges in engineering may be due to lack of synchronization between the physical process and the virtual process. For example, a digital twin of the devices may not be in sync with the physical devices. Another challenge may be the lack of a comprehensive view of the systems due to the distributed set-up. Yet another challenge is the regular changes in the cyber-physical systems/devices. Components may be changed, added, removed or replaces. The components may be software or hardware components. Therefore, it may be time consuming, compute intensive and error prone to engineer and commission cyber-physical systems and devices.

Existing techniques to overcome the challenges include designing a cyber-physical system in one integrated development environment (IDE) with the constituent devices and components that are explicitly compatible. Such explicit compatibility may be achieved only by ensuring that the constituent devices and components are from a single vendor and the compatibility is verified. Therefore, knowledge regarding compatibility maybe mandatory to engineer the cyber-physical system.

To overcome the compatibility concerns, typically the engineering and commissioning time is extended. However, this may be disadvantageous when automation environments need to be engineered and setup on a short notice. Further, the complexity of the engineering may result in excessive undesirable delays.

Therefore, improvements in the techniques for engineering the cyber-physical systems and devices is desirable. The object of the present invention is to engineer the cyber-physical systems and devices whereby fast and error free commissioning is possible.

In an example, a method for engineering at least one technical system including one or more cyber-physical devices is disclosed. The method comprises generating an engineering code for the technical system based on at least one of configuration and function associated with the devices, wherein the engineering code enables coordination between the devices whereby at least one operation in the technical system is performable; determining executability of the engineering code based on a compatibility indicator associated with at least one of the devices, the system and the operation; and engineering at least one device of the one or more devices based on the determined executability of the engineering code.

In another example, a system for engineering at least one technical system including one or more cyber-physical devices is disclosed. The system comprises an engineering module configured to perform one or more method steps disclosed herein. The system may include an integrated development tool configured as an editor to enable engineering of the devices based on a device description of the devices; a program code generator module configured to generate an engineering code for the technical system based on at least one of configuration and function, associated with the devices, provided in the device description and wherein the engineering code enables coordination between the devices whereby at least one operation in the technical system is performable; installation tool configured to instantiate parameters in the engineering code to determine executability of the engineering code by accessing at least one of the device description, a system description and process description associated with the at least one operation; and wherein the integrated development tool is configured to display feedback regarding the executability of the engineering code.

A further example may include a non-transitory computer readable medium encoded with executable instructions (such as a software component on a storage device) that when executed, causes at least one processor to carry out this described method.

The present invention advantageous enables error free generation of the engineering code used for commissioning, operating and maintaining cyber-physical devices in the technical system. The determination of executability of the engineering code can be advantageously done at any stage during the life-cycle of the technical system. The executability check of the engineering code along with visual indication of incompatibility with currently installed cyber-physical devices may be crucial to avoid prolonged delays in commissioning and reconfiguration.

Accordingly, the technical effect of this invention is that it fosters faster commissioning of the cyber-physical system and devices. For example, factory automation hardware may be commissioned faster. Further, the present invention enables increase in flexibility of reconfiguration of software/hardware components in the cyber-physical system and devices.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein "technical system" refers to a facility that for manufacture, production that may be semi or completely automated. The technical system may be part of an automation environment. For example, industrial automation environment, laboratory automation environment, building automation environment and the like. Further, according to the present invention, automation environment may include a combination of one or more industrial automation environments, laboratory automation environments, building automation environments.

The cyber-physical devices may be control devices, sensors, actuators that include a physical device and a digital model that can be used to configure and control the physical device. For example, Computer Numerical Control (CNC) machines, automation systems in an industrial production facility, motors, generators and the like. The technical system can also be referred to a cyber-physical system as it includes the cyber-physical devices.

The engineering code refers to code that is used to engineer, coordinate or orchestrate the cyber-physical devices in the technical system. As used herein engineer includes commissioning of devices, reconfiguring the devices, modifying operating parameters of the devices. The engineering code may be generated through graphical programming or using textual programming. Based on the engineering code actions/skills/functions of the cyber-physical devices can be implemented. By implementing actions/skills/functions of the cyber-physical devices one or more operations in the technical system can be performed. In an embodiment, the operation in the technical system may include a part of a process performed in technical system. For example, the operation may be using a robotic arm (cyber-physical device) to insert a component into a paint liquid.

The engineering code may be orchestrated to perform the operation. For orchestration, the engineering code does not need to run on a separate hardware. In an embodiment, the integrated development tool may distribute orchestration of the engineering code on one or more control devices in the automation environment.

The engineering code is advantageously used to enable faster commissioning of the cyber-physical devices so that one or more operations in the technical system can be performed. In an embodiment, object-oriented programming is advantageously used to define the cyber-physical devices as objects. By defining the cyber-physical devices as objects the actions/skill/functions of the cyber-physical devices can be easily accessed. Further, using object-oriented programming, the actions/skill/functions of the cyber-physical devices can be mapped across multiple databases.

The method may include enabling generation of the engineering code using an integrated development environment generated by the integrated development tool. The integrated development tool may be communicatively coupled to a lifecycle database, a manufacturing execution database and/or an operation-maintenance database associated with the devices and/or the technical system, wherein the lifecycle database comprises at least one of conception information, design information, realization information, inspection planning information, or any combination thereof, wherein the manufacturing execution database comprises at least one of production data, device validation data, inspection execution data, or any combination thereof, wherein the operation-maintenance database comprises at least one of operation data associated with operation of the devices and/or the technical system, non-conformance information, service information of the devices, or any combination thereof, and wherein the devices and the technical system are mappable across the lifecycle database, the manufacturing execution database and the operation-maintenance database using a unique identification.

The mapping of the cyber-physical devices and the technical system are mappable across the lifecycle database, the manufacturing execution database and the operation-maintenance database may be enabled by defining the cyber-physical devices and the technical system as objects in object-oriented programming. The unique identification enables the information across the databases to be associated to a referenceable unique identifier.

The referencing the information across the databases may be used to generate device description, system description and/or process description. In an embodiment, individual device description is generated for each of the cyber-physical devices. The device description may be stored on/in the (memory unit of the) cyber-physical device or can be separately stored and accessed by the cyber-physical device and/or the integrated development tool by the unique identification. The device description and the system description may be updated to reflect real-time operating conditions of the cyber-physical devices and the technical system. In an embodiment, the device description may be implemented through programmable graphs that may be organized in relation to the logical, physical and mechanical function of the cyber-physical devices in the technical system.

The method may include generating the device description as an object-oriented class, wherein the device description for the devices is configurable to enable control of the cyber-physical devices. As used herein, the object-oriented class acts as a template that can be extended, modified and updated. In an embodiment, the method may further include encapsulating the device description to generate the system description, wherein the system description comprises actions performable by the system, configuration and function associated with the technical system. In another embodiment, the device description and the system description are generated from digital models or digital twins. As used herein digital twin refers to a virtual model of the cyber-physical devices and the technical system generated using a combination of physics-based rules and machine learning techniques.

By generating the device description as the object-oriented class, the present invention advantageously enables combination of the functions of the cyber-physical devices and the configuration requirements. Accordingly, when the system description is generated, operation of the cyber-physical devices is encapsulated into a single entity that models the state and behavior of cyber-physical devices, processes, and other constructs in the technical system. Through the device description simplicity is achieved by keeping details within the device description itself and presenting a simplified interface. Other programs, such as the integrated development tool, can interact with the device description through its simplified interface without needing knowledge of the device description's inner operation.

The above advantage can be scaled further down to a component level. In embodiments where the cyber-physical devices include components, the device description may be generated based on encapsulation of component descriptions of the components. The method may include engineering the components in at least one device whereby the device description is configurable based on component description of the components. Therefore, the present invention is advantageously scalable using existing information available for the components and the cyber-physical devices.

In another embodiment, the system description may be generated without the device description. The method may include generating the system description associated with the technical system by mapping the lifecycle database, the manufacturing execution database and the operation-maintenance database using the unique identification of the technical system. The system description advantageously serves as a real-time digital representation of the technical system.

The lifecycle database, the manufacturing execution database and the operation-maintenance database may be part of the system that implements the method disclosed herein. In an embodiment, the lifecycle database, the manufacturing execution database and the operation-maintenance database may outside the system and are accessed using Application Program Interface (API) calls.

The process description may also be generated from the databases based on the type of operation to be performed in the technical system. In an embodiment, a unique identifier may be associated with each operation that is to be performed in the technical system. The operations may be referenced with the databases to determine parameters that define the operations based on steps that need to be performed. In another embodiment, the process description may be part of the device description or the system description or in the combination thereof.

The method may include generating the engineering code based on the device description generated from the mapping of at least one of the lifecycle database, the manufacturing execution database, the operation-maintenance database and the devices using the unique identification. In an embodiment, the present invention advantageously uses existing mapping across databases to generate the engineering code. In some embodiments, the mapping may be in accordance with standards associated with the automation environment such as Industry 4.0.

To build the engineering code the cyber-physical devices that are linked to each other may be reviewed for compatibility. The compatibility indicator enables such a review. The compatibility indicator may be defined using the device description and the system description based on the actions, the configuration and the functions associated with the devices with respect to the actions, the configuration and the function associated with the technical system. In an embodiment, the compatibility indicator refers to a mapping of the device description and the system description with regard to the operation that is to be performed in the technical system. For example, the compatibility indicator may be qualifiable metric. In another example, the compatibility indicator is an indication of compatible and non-compatible parameters in the device description and the system description.

The compatibility indicator is used to determine executability of the engineering code. In operation, the compatibility indicator may vary based on the operation and the cyber-physical device. Accordingly, multiple compatibility indicators may be generated at different instances during operation of the technical system. Alternatively, multiple compatibility indicators may be generated during design and commissioning of the technical system based on the cyber-physical devices used for the commissioning.

The method may include generating at least one instance for the at least one device by instantiating the at least one device using the integrated development environment based on the device description. As used herein "instance" refers to a copy of the device description generated for the at least one device from the one or more cyber-physical devices. The instance may be created by declaring the instance and allocating memory and compute resources for variables associated with the instance. Multiple instances can be generated for the at least one device based on the operation performed in the technical system.

The method may further include analyzing the engineering code by inferencing data structures in the device description and the system description, wherein the device description comprises the at least one instance. In an embodiment, the inferencing of the data structures is performed across the device description, the process description and the system description. Accordingly, when the instance is generated, the engineering code associated with the instance is analyzed. In an embodiment, the analysis includes type inference for the instance. The resulting device description is referred to as device-instance description. In another embodiment, the analysis is performed using template argument deduction. Therefore, the present invention advantageously analyses the device-instance description and the system description without the need for a trial and error-based check regarding compatibility of the device with the technical system and the operation. Further, no prior experience will be required to validate whether the at least one device is suitable for the technical system to perform the operation.

In addition to the analysis, the method may include generating the compatibility indicator of the at least one device based on a semantic analysis of the device description and the system description. The semantic analysis may include an analysis of syntactic structures in the device description of the instance (device-instance description) and the system description and the process description in some embodiments.

In an embodiment of the present invention, determination of executability may include determination of the compatibility indicator itself. In another embodiment, the compatibility indicator is a parameter in determining the executability of the engineering code. In other embodiments, explicit override parameters may be included to increase or decrease the significance of the compatibility indicator in the determination of the executability.

The method may include displaying the executability of the engineering code as a feedback on a graphical user interface of the integrated development environment. In an embodiment, the display of the feedback may be performed during a build-stage of the engineering code. Accordingly, the present invention avoids time consuming re-engineering of the technical system if there is an error or even a potential error during build.

The feedback comprises error messages, annotations and/or suggestion messages. For example, the error message includes an indication that a wrong cyber-physical device has been engineered/commissioned for a particular operation in the technical system. The error messages can include potential errors and mismatches. Other error messages may include an indication of a missing device in the engineering code without which successful completion of the operation in the technical system is not possible. Annotations may include indications of errors in the syntax of the textual program or incorrect field used during graphical programming. In addition to indication of errors the present invention advantageously suggests how the errors can be rectified. Such suggestions may be referred to as refactoring suggestions and in some embodiments may be implemented automatically by the IDE.

For example, the error message may result in a portion of the engineering code to be highlighted. The highlighted code may indicate the portion that cannot be executed because the cyber-physical devices including their skills are missing in the real technical system. Further, the IDE may also suggest the replacement available based on the information in the manufacturing execution database and the operation-maintenance database. In an embodiment, the IDE is configured to display suggestions based on the process description and the system description.

The aforementioned features of the present invention enable faster commissioning of the cyber-physical system and devices. Further, the present invention enables increase in flexibility of reconfiguration of software/hardware components in the cyber-physical system and devices.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates a system for engineering a technical system, according to an embodiment of the present invention;
- Figs. 2-5: illustrate visual representations of operation of an integrated development environment, according to an embodiment of the present invention;
- Fig. 6: illustrates a system for engineering a technical system, according to an embodiment of the present invention; and
- Fig. 7: illustrates a method for engineering a technical system, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

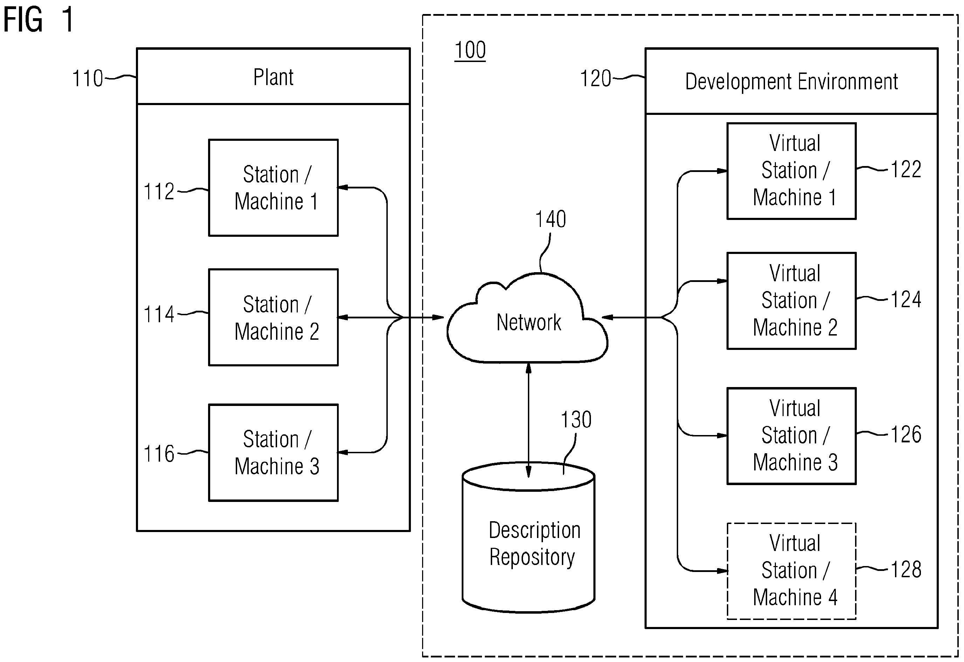

Fig. 1 illustrates a system 100 for engineering a technical system 110, according to an embodiment of the present invention. As shown, the technical system refers an industrial plant 110 that includes multiple devices/assets 112-114. The devices may include interface devices, control devices, edge devices, Internet of Things (IoT) enabled devices, which collect data from various sensors and/or actuators deployed in the industrial plant. In some embodiments, the industrial plant 110 may include an Integrated Development Environment (IDE) as indicated by number 120. The IDE is used to configure the physical devices 112-116 using also logical entities that define relationship between the devices 112-116 in the industrial plant 110.

The devices 112-116 are cyber-physical devices in view of their physical entities and their logical entities 122-126. For example, the devices 112-116 can be equipment, sensors, actuators, robots, machinery in an industrial automation environment. The devices 112-116 can also be medical devices and equipment in a healthcare automation environment. Furthermore, the devices 112-116 can be home appliances or office appliances or systems in a building automation environment.

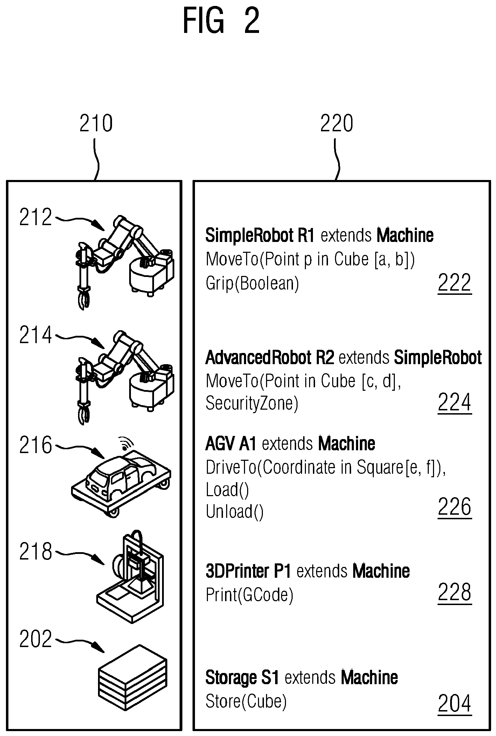

The system 100 according to an embodiment of the present invention includes an IDE 120, a database 130 and an IOT computing platform 140. The IDE 120 is used to generate an engineering code that is used to engineer the industrial plant 110. As used herein engineer includes commissioning of devices 112-116, reconfiguring the devices 112-116, modifying operating parameters of the devices 112-116. The operation of the IDE 120 to build the engineering code is explained in detail with Figs 2-5.

The database 130 is a repository of descriptions associated with the devices 112-116 and the industrial plant 110. The descriptions are referred to as device description and system description for the devices 112-116 and the plant 110, respectively. In an embodiment, individual device description is generated for each of the devices 112-116. The descriptions are generated by referencing the information across digital models created for the devices 112-116 and the plant 110. The device description and the system description may be updated to reflect real-time operating conditions of the devices 112-116 and the plant 110. In an embodiment, the device description may be implemented through programmable graphs that may be stored in relation to the logical, physical and mechanical function of the devices 112-116 in the plant 110.

The IOT computing platform 140 may be a cloud computing platform, a fog/edge computing platform or a combination of both. In an embodiment the IOT computing platform 140 serves as a host on which the IDE 120 is executed. The IOT computing platform 140 includes distributed compute resources distributed and connected by means of a communication network.

As used herein, "cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

As used herein "fog computing" or edge computing enables the IOT platform to be realized closer to the automation environment. Fog/edge computing extends the cloud computing to the physical location of the devices belonging to the automation network. It may be combination of multiple edge devices that are configured to execute the operation of the IOT platform 140. A user may access the computing device via the IOT platform 140 to operate on the IDE 120.

Fig 1 illustrates an embodiment where the devices 112-116 are reflected in the IDE 120 as virtual devices 122-126. The virtual devices 122-126 are reflected based on either the descriptions from the database 130 or inspection of the plant 110 or a combination thereof. The descriptions may be used to avoid reliance on manual inputs. In an embodiment, an automation engineer can commission a new device by creating the virtual device 128. In another embodiment, a feedback indicating requirement of the new device is provided. The IDE 120 enables addition of the new device by the creation of the virtual device 128.

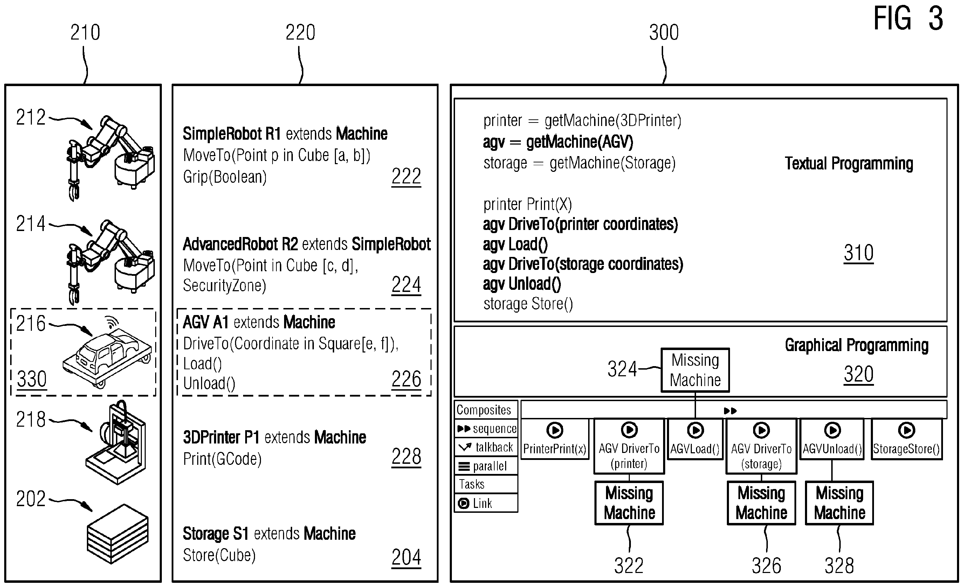

To generate the feedback, the IDE 120 is configured to enable determination of the executability of the engineering code that is built. The determination of executability is done based on the configuration and functions of the devices 112-116 and the plant 110 for one or more operations. The configuration and functions are determined from the device description and the system description. The executability may be defined as a compatibility indicator between the devices 112-116 and the plant 110 for the operations. In an embodiment, the executability is determined using static code analysis that includes type inference of the device description and the system description. There may be multiple types of feedback provided through the IDE 120. Figs 3-5 illustrate different the types of feedback.

Figs. 2-5 illustrate visual representations of operation of an integrated development environment, according to an embodiment of the present invention. Fig. 2 illustrates representations of cyber-physical devices 212-218 in a technical system. The cyber-physical devices 212-218 include robots 212, 214, an Automated Guided Vehicle (AGV) 216, a 3D printer 218 and a memory unit 202.

The cyber-physical devices 212-218 are described as object-oriented classes. As used herein classes act like templates. The classes can be instantiated as different class instances. Accordingly, the class instance act as a template that is customized for a given cyber-physical device. As shown in Fig. 2, device description 222 is for the device 212, where the device 212 is described using the simple robot class instance SimpleRobotR1. The SimpleRobotR1 class instance can be extended to incorporate parameters from a Machine class.. The skills of a Machine are specified in constructor call, e.g. network configuration of suitable for a machine to communicate in the technical system. Further, the device description 222 includes functions 'MoveTo' and 'Grip'. Furthermore, the device description 222 includes function definition (i.e. parameters that define the function) 'Point p in Cube [a,b]' and 'Boolean'.

Similarly, device description 224 describes the robot 214 with the class instance AdvancedRobotR2 which can be extended with the parameters from the object-oriented class SimpleRobot. Accordingly, AdvancedRobot is a sub class of SimpleRobot and inherits skills of simple robot. The function MoveTo is defined by the parameters Point in Cube [c,d], SecurityZone. The device description 226 describes the AGV 216 with the class instance AGV A1 that extends to the Machine class with functions 'DriveTo', 'Load' and 'Unload'. The device description 228 describes the 3D printer 218 with the class instance 3DprinterP1 that extends to the class Machine with 'Print' as the function. The device description 204 is generated for the memory unit 202 with the class instance StorageS1 that extends to the class Machine.

The device descriptions 222, 224, 226, 228 and 204 describe the functions, skill and actions performed by the robots 212, 214, the AGV 216, the 3D printer 218 and the memory unit 202. Through the device descriptions 222, 224, 226, 228 and 204, simplicity is achieved by keeping details within the device description itself and presenting a simplified interface. Other programs, such as the integrated development tool, can interact with the device description through its simplified interface without needing knowledge of the device description's inner operation. The advantage of a simplified interface is also seen when class instances are extended to include parameters of other classes as indicated hereinabove.

Fig. 3 illustrates an IDE 300 indicating a scenario where cyber-physical devices are missing in the technical system. The IDE 300 includes a textual programming interface 310 and a graphical programming interface 320. An engineering code can be built using either the textual programming interface 310 or the graphical programming interface 320.

As shown, the engineering code includes reference to the 3D printer 218 and the AGV 216. However, the technical system in Fig. 3 does not include the AGV 216 as indicated by the numeral 330. Accordingly, the feedback of missing machine is provided at the portions 322-328 of the engineering code.

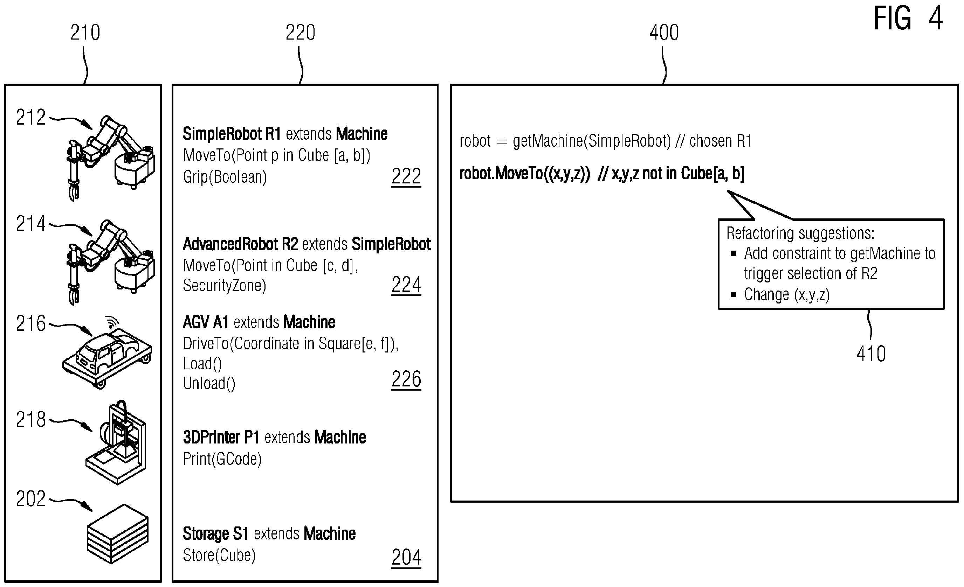

Fig. 4 illustrates an IDE 400 indicating a scenario where the engineering code erroneously includes parameters that are beyond the skills of a cyber-physical device. In the present embodiment, the engineering code defines the function of the robot 212 to move to coordinates x,y,z. The IDE 400 indicates the feedback by highlighting the incorrect code and providing refactoring suggestion 410. IDE 400 highlights the incorrect code because the point (x,y,z) is not in the reachable cube of simple robot 212. The suggestion 410 includes alternatives that indicate that the advanced robot 214 is more suitable or the coordinates need to be changed. To provide the suggestion of the replacement robot 214, the IDE 400 may in sync with interfaces that indicate the devices available in the technical system in real-time. Accordingly, the IDE 400 advantageously functions as a digital companion detecting problems for execution of the engineering code and suggesting solutions to detected problems.

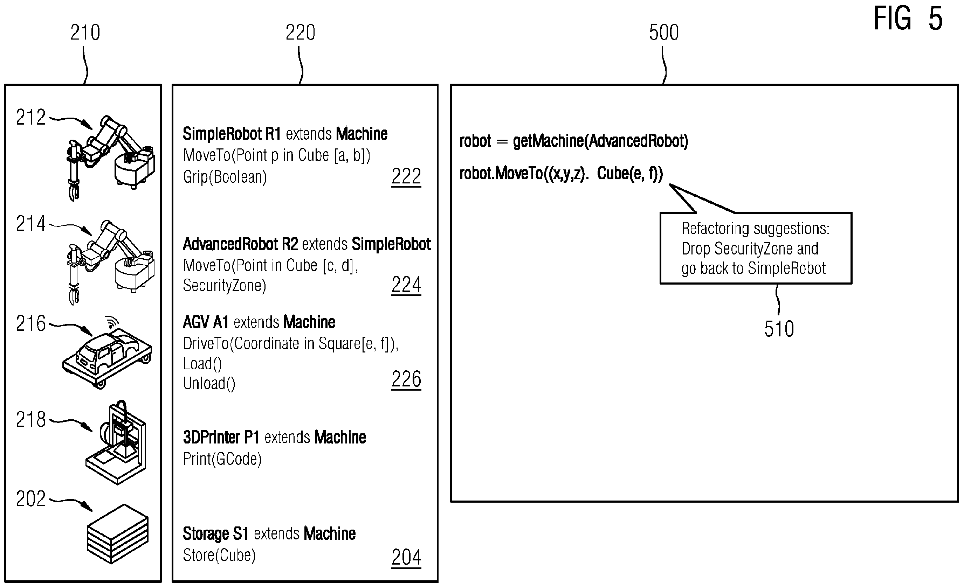

Fig. 5 illustrates a scenario where the advanced robot 214 is not part of the technical system. The IDE 500 highlights the engineering code that cannot be executed, because a machine "AdvancedRobot" is not physically available in the technical system. Further, the IDE 500 also offers a refactoring suggestion 510 that would be accomplished by the IDE 500. For example, the refactoring suggestion is to replace the AdvancedRobot by its base class SimpleRobot. In an embodiment, the refactoring suggestion is automatically implemented.

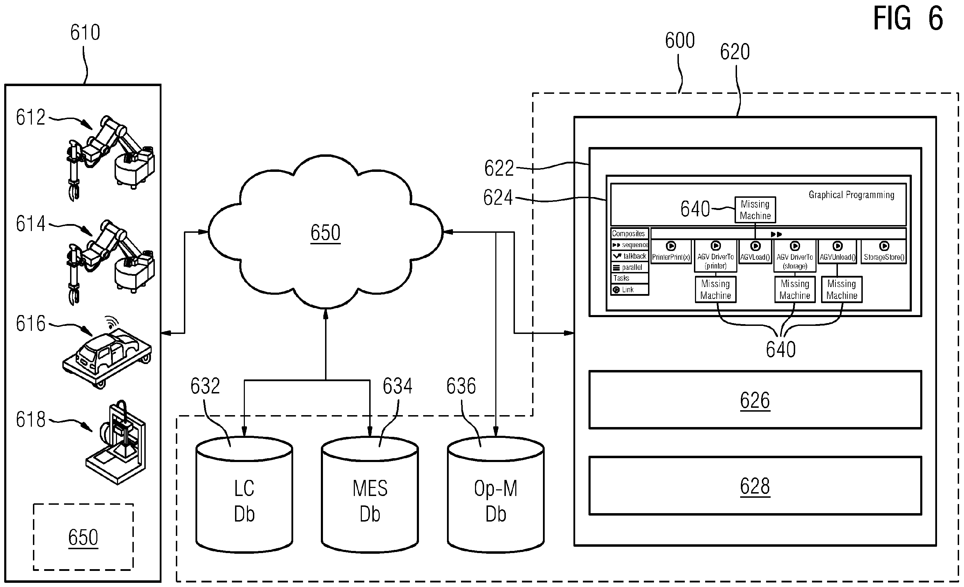

Fig. 6 illustrates a system 600 for engineering a technical system 610, according to an embodiment of the present invention. The technical system 600 includes cyber-physical devices 612-618 comprising a simple robot 612, an advanced robot 614, an AGV 616 and a 3D printer 618. The devices 612-618 are used to perform one or more operations in the technical system 610. The system 600 is used to engineer the devices 612-618 to enable performance of the operations.

The system 610 includes an engineering module 620 that may be executed across multiple computing devices. The engineering module 620 includes an integrated development tool 622 with a graphical interface (GUI) 624. The engineering module 620 further comprises a program code generator 626 and an installation tool 628.

The system 610 in some embodiments may also include databases 632, 634 and 636. The databases are used to generate device description and system description for the devices 612-618 and the technical system 610, respectively.

The databases 632-638 include lifecycle database 632, a manufacturing execution database 634 and an operation-maintenance database 636. The lifecycle database 632 includes conception information, design information, realization information, inspection planning information, or any combination. The manufacturing execution database 634 includes production data, device validation data, inspection execution data, or any combination thereof. The operation-maintenance database 638 includes operation data associated with operation of the devices and/or the technical system, non-conformance information, service information of the devices, or any combination thereof.

The devices 612-618 and the technical system 610 are mappable across the databases 632-636 using a unique identification. The unique identification may be generated using the engineering module 620. In an embodiment, reference of the devices 612-618 and the technical system 610 is made using digital twin of the technical system 610.

The engineering module 620 is communicatively coupled to at least one of the lifecycle database 632, the manufacturing execution database 634 and the operation-maintenance database 636 associated with the devices and/or the technical system. In operation, the engineering module 620 is configured to generate the device description and the system description based on the information from the databases 632-636.

The integrated development tool 622 is used to configure the GUI 624 as an editor to enable engineering of the devices 612-618 based on the device description of the devices 612-618. The GUI 624 can also be referred to as an Integrated Development Environment (IDE) 624.

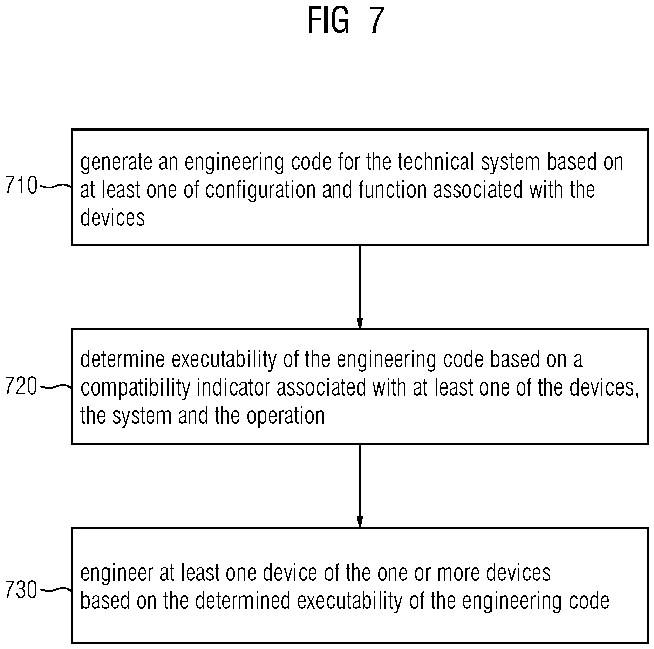

The program code generator module 626 is configured to generate an engineering code to engineer the technical system 610 based on configuration and/or function, associated with the devices provided in the device description. The engineering code enables coordination between the devices 612-618 whereby operations in the technical system 610 are performable. The generation of the engineering code is described in detail in Fig. 7.

The installation tool 628 is configured to instantiate parameters in the engineering code to determine executability of the engineering code by accessing the device description, a system description and process description associated with the operations. The integrated development tool 622 is configured to display feedback 640 regarding the executability of the engineering code on the IDE 624.

In an embodiment, the installation tool 628 is configured to generate an instance for the device 612 by instantiating the device 612 based on the device description of a Simple Robot. The installation tool 628 analyzes the engineering code by inferencing data structures in the device description of the Simple Robot and the system description. Further, the installation tool 628 generates the compatibility indicator of the device 612 based on a semantic analysis of the device description and the system description to determine whether the engineering code is indeed executable.

The feedback 640 may be an error message, an annotation to the engineering code or a suggestion. In Fig. 6, the feedback 640 relates to scenario where a cyber-physical device 650 is missing in the technical system 610. In an embodiment, the IDE 624 is configured to display alternatives to the device 650 based on the process description and the system description.

Fig. 7 illustrates a method for engineering a technical system, according to an embodiment of the present invention.

The method begins at step 710 by generating an engineering code for the technical system-based configuration and/or function associated with devices in the technical system. The engineering code enables coordination between the devices whereby one or more operations in the technical system are performable.

The step 710 may also include enabling generation of the engineering code using an Integrated Development Environment (IDE) communicatively coupled to at least one of a lifecycle database, a manufacturing execution database and an operation-maintenance database associated with the devices and/or the technical system.

In an embodiment, step 710 may also include generating the engineering code based on device description generated from the mapping of at least one of the lifecycle database, the manufacturing execution database, the operation-maintenance database and the devices using the unique identification. The device description comprises actions performable by the devices, the configuration and the function associated with the devices.

In another embodiment, step 710 may include generating the device description as an object-oriented class, wherein the device description for the devices is configurable to enable control of the cyber-physical devices. Further, the device description may be encapsulated to generate the system description, wherein the system description comprises actions performable by the system, configuration and function associated with the technical system.

In yet another embodiment, step 710 may include generating the system description associated with the technical system by mapping the lifecycle database, the manufacturing execution database and the operation-maintenance database using the unique identification of the technical system Further, a process description associated with the operations in the technical system may be generated based on the mapping. The system description acts a real-time digital representation of the technical system and the process description acts as a digital representation of the operations.

Step 720 includes determining executability of the engineering code based on a compatibility indicator associated with the devices, the system and the operation. In an embodiment of the present invention, determination of executability may include determination of the compatibility indicator itself. The compatibility indicator may be defined using the device description, the process description and the system description based on the actions, the configuration and the functions associated with the devices with respect to the actions, the configuration and the function associated with the technical system and the operation.

In an embodiment, step 720 may include generating at least one instance for one of the devices by instantiating the at least one device using the integrated development environment based on the device description. Accordingly, the device description may act as a template that is used for instantiation. Further, step 720 may include analyzing the engineering code by inferencing data structures in the device description and the system description, wherein the device description comprises the instance. In an embodiment, the inferencing of the data structures is performed across the device description, the process description and the system description. Accordingly, when the instance is generated, the engineering code associated with the instance is analyzed. In an embodiment, the analysis includes type inference for the instance. The resulting device description may be referred to as device-instance description. Therefore, the present invention advantageously analyses the device-instance description and the system description without the need for a trial and error-based check regarding compatibility of the device with the technical system and the operation.

In addition, step 720 may include generating the compatibility indicator of the at least one device based on a semantic analysis of the device description and the system description. The semantic analysis may include an analysis of syntactic structures in the device description of the instance (device-instance description) and the system description. In some embodiments, the analysis of the syntactic structures is performed across the device description, the process description and the system description.

Step 730 includes engineering the at least one device of the one or more devices based on the determined executability of the engineering code. In an embodiment, the at least one device may be engineered by engineering the components in the at least one device whereby the device description is configurable based on component description of the components.

Step 730 may include displaying the executability of the engineering code as a feedback on a graphical user interface of the IDE, wherein the feedback comprises at least one of error messages, annotations and suggestion messages.

For example, the error message may result in a portion of the engineering code to be highlighted. The highlighted code may indicate the portion that cannot be executed because the cyber-physical devices including their skills are missing in the real technical system. Further, the IDE may also suggest the replacement available based on the information in the manufacturing execution database and the operation-maintenance database. In an embodiment, the IDE is configured to display suggestions based on the process description and the system description.

In an embodiment, the technical system is engineered by incorporating suggestion on rectifying errors in the engineering code. Such suggestions may be referred to as refactoring suggestions and in some embodiments may be implemented automatically by the IDE.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art. Additionally, while the current disclosure describes the configuration tool 110 as an independent component, the configuration tool may be a software component and may be realized within a distributed control system or an engineering software suite. Additionally, in an embodiment, one or more parts of the engineering module may be realized within the technical system.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to system/device claims.

## Claims

1. A method for engineering at least one technical system (610) including one or more cyber-physical devices (612-618), the method comprising:
generating an engineering code for the technical system (610) based on at least one of configuration and function associated with the devices (612-618), wherein the engineering code enables coordination between the devices (612-618) whereby at least one operation in the technical system (610) is performable;
determining executability of the engineering code based on a compatibility indicator (410) associated with at least one of the devices (612, 212), the system and the operation; and
engineering at least one device (612) of the one or more devices based on the determined executability of the engineering code.

2. The method according to claim 1, further comprising:
enabling generation of the engineering code using an Integrated Development Environment (IDE) (624, 120) communicatively coupled to at least one of a lifecycle database (632), a manufacturing execution database (634) and an operation-maintenance database (636) associated with the devices and/or the technical system (610),
wherein the lifecycle database (632) comprises at least one of conception information, design information, realization information, inspection planning information, or any combination thereof,
wherein the manufacturing execution database (634) comprises at least one of production data, device validation data, inspection execution data, or any combination thereof, wherein the operation-maintenance database (636) comprises at least one of operation data associated with operation of the devices (612-618) and/or the technical system (610), non-conformance information, service information of the devices, or any combination thereof, and
wherein the devices and the technical system (610) are mappable across the lifecycle database (632), the manufacturing execution database (634) and the operation-maintenance database (636) using a unique identification.

3. The method according to one of the preceding claims, further comprising:
generating the engineering code based on device description generated from the mapping of at least one of the lifecycle database (632), the manufacturing execution database (634), the operation-maintenance database (636) and the devices using the unique identification.

4. The method according to claim 3, wherein the device description comprises actions performable by the devices (612-618), the configuration and the function associated with the devices.

5. The method according to one of the preceding claims, further comprising:
generating the device description as an object-oriented class, wherein the device description for the devices is configurable to enable control of the devices (612-618); and
encapsulating the device description to generate the system description, wherein the system description comprises actions performable by the system, configuration and function associated with the technical system (610).

6. The method according to one of the preceding claims, further comprising:
generating the system description associated with the technical system (610) by mapping the lifecycle database (632), the manufacturing execution database (634) and the operation-maintenance database (636) using the unique identification of the technical system (610), wherein the system description is a real-time digital representation of the technical system (610); and
generating a process description associated with the at least one operation by mapping the lifecycle database (632), the manufacturing execution database (634) and the operation-maintenance database (636) using the unique identification of the operation, wherein the executability of the engineering code is determined based on at least one of the device description, the system description and the process description.

7. The method according to one of the preceding claims, wherein the compatibility indicator is defined using at least one of the device description, the process description and the system description based on the actions, the configuration and the functions associated with the devices with respect to the actions, the configuration and the function associated with the technical system (610).

8. The method according to one of the preceding claims, wherein determining executability of the engineering code comprise:
generating at least one instance for the at least one device by instantiating the at least one device using the integrated development environment based on the device description;
analyzing the engineering code by inferencing data structures in the device description and the system description, wherein the device description comprises the at least one instance; and
generating the compatibility indicator of the at least one device based on a semantic analysis of the device description and the system description.

9. The method according to one of the preceding claims, further comprising:
displaying the executability of the engineering code as a feedback on a graphical user interface (624) of the IDE, wherein the feedback (640) comprises at least one of error messages (322-328), annotations and suggestion messages (410, 510) .

10. The method according to one of the preceding claims, wherein the at least one device includes one or more component and wherein the method comprises:
engineering the components in the at least one device whereby the device description is configurable based on component description of the components.

11. A system for engineering at least one technical system (610) including one or more cyber-physical devices (612-618), the system comprising an engineering module (620) configured to perform one or more method steps according to claims 1 to 10.

12. The system according to claim 11, wherein the system comprises:
an integrated development tool (622) configured as an editor to enable engineering of the devices based on a device description of the devices;
a program code generator module (626) configured to generate an engineering code for the technical system (610) based on at least one of configuration and function, associated with the devices, provided in the device description and wherein the engineering code enables coordination between the devices whereby at least one operation in the technical system (610) is performable;
installation tool (628) configured to instantiate parameters in the engineering code to determine executability of the engineering code by accessing at least one of the device description, a system description and process description associated with the at least one operation; and wherein the integrated development tool is configured to display feedback regarding the executability of the engineering code.

13. The system according to claim 11, wherein the wherein the integrated development tool is configured to display feedback (640) regarding the executability of the engineering code during a build-stage of the engineering code.

14. The system according to claim 10, further comprising a lifecycle database (632), a manufacturing execution database (634) and an operation-maintenance database (636) associated with the devices and/or the technical system (610), wherein the lifecycle database (632) comprises at least one of conception information, design information, realization information, inspection planning information, or any combination thereof, wherein the manufacturing execution database (634) comprises at least one of production data, device validation data, inspection execution data, or any combination thereof, wherein the operation-maintenance database (636) comprises at least one of operation data associated with operation of the devices (612-618) and/or the technical system (610), non-conformance information, service information of the devices, or any combination thereof, wherein the devices and the technical system (610) are mappable across the lifecycle database (632), the manufacturing execution database (634) and the operation-maintenance database (636) using a unique identification, and wherein the integrated development tool is communicatively coupled to at least one of the lifecycle database (632), the manufacturing execution database (634) and the operation-maintenance database (636) associated with the devices (612-618) and/or the technical system (610).

15. A computer program product, comprising computer readable code, that when executed on a processor, performs any one of the method steps of one or more of the method claims 1 to 10.
